# EUROPEAN PATENT APPLICATION

(11) **EP 2 600 485 A1**
(43) Date of publication of application: **05.06.2013**
(21) Application number: 11819460.4
(22) Date of filing: 27.07.2011
(51) Int. Cl.: H02J 7/00, H04B 1/38, H04M 1/247

(54) **COMMUNICATION SYSTEM**

(30) Priority: 22.10.2010 ES 201001386; 27.07.2010 ES 201031163
(71) Applicant: Amen Rodriguez, Guillermo, 08970 Sant Joan Despi (Barcelona) (ES)
(72) Inventor: Amen Rodriguez, Guillermo, 08970 Sant Joan Despi (Barcelona) (ES)
(74) Representative: Curell Suñol, Jorge
(86) International application number: PCT/ES2011/070552
(87) International publication number: WO 2012/025654

(57) **Abstract**

The invention relates to a communication system comprising a base (1) and a wireless or mobile telephone (17) that can be wirelessly connected to the base (1). The invention is characterised in that the base (1) includes: a battery such that it is portable; a plurality of push-buttons (4, 6, 7, 8) for performing the telephone (17) functions by means of the connection to the base (1); a loudspeaker (13) for listening to a telephone call; and a microphone (19) for making a telephone call. In this way, the base is connected to a telephone and offers the same functions as said phone, but in a more easily accessible manner.

## Description

The present invention talks about to a system of multifunctional and portable telephone communication that, essentially designed for particular use on the part of any person who requires a system of mobile telephony that can contribute to value as far as design, load or functions, and for especially old or people with difficulties of mobility and/or capacities of reduced vision and ear, but without it supposes a limitation, she has as essential purpose to facilitate the use of the basic functions of a terminal of mobile telephony being allowed, simultaneously, to associate to the line of the same a telephone service of emergency and to serve, in addition, of station of charge for the battery of this terminal, lamp and radio alarm-clock, all this in a portable and independent compact element, so that it is apt, as much to be able to locate it in any stay of the house, like using it in any place that is anticipated necessary during an undetermined time (second residence, hotel of vacations, etc.).

### PRIOR ART

As we know, to the majority of people, and especially to greater people and many people with reduced faculties the use is to them complex from the conventional mobile phones, especially by the complexity of its functions and reduced so large of the keys and/or the icons and texts of the touch screens or no, that, especially in the most recent models are very difficult to see and still more handle for this type of people, as well as connecting means to come to their charge and/or to connect auricular or other additional devices to them.

In order to solve these disadvantages, the existence of special mobile phones is well-known that count on reduced to functions and sets of buttons of especially great size. Nevertheless, this type of telephones usually do not arrange nor very many the same benefits less than the present conventional telephones, usually is expensive with respect to the benefits of provide and, in addition, normally they are not including in the supplies of the companies of telecommunications. For this reason, the most practical solution would be to equip to average the conventional mobile phones with facilitating its use, instead of having to be forced to the use of special telephones, allowing that this type of people can benefit like any other from the benefits and advantages that offer the present mobile phones and the companies that provide them. Additionally all the advantages of the design of these equipment concentrate in the same equipment and in the amount of processes for which they must be preparations, that is to say, the functionality of equipment beyond the functionality of the process does not prioritize to cover.

On the other hand, the existence in many municipalities of services of telephone attendance is widely known destined to maintain in contact disabled old people or with a power station from which they control any necessity that can have.

These services usually give associate to a telephone line understanding the existence of a base installed in the address of the subject, which counts at least on a wireless button button in emergency being often tie that can be taken hung man to the neck.

This base is connected to the telephone line of the user but, by the characteristics that these bases present until now, usually they are associated to a line of fixed telephony, and so its use is limited the operational range of the base and this one presents a fixed character, when connected being to this fixed line.

For this reason, he would be desirable to be able to count on bases of this type of services that were portable and that could be associated as much to a fixed line as to a mobile line, allowing his use to a greater rank of users, since nowadays everybody does not have line of fixed telephone since the lines of mobile telephony compete in price with those of fixed telephony, choosing many users to do without the fixed one, as well as to allow to be able to install the base in different locations from the own house, according to agrees, or to even be able to install it in other places if a prolonged stay is anticipated more or less that can require of the service, for example during a stay in place different from the habitual one, or by vacations, therapeutic recovery, visits relatives, etc.

Finally, another one of the disadvantages that would be desirable to solve for the disabled adults and/or in some of their functions, is the make to have a concrete and safe place to place the mobile phone terminal, and to assure that properly it will be loaded and that the call tone will be able to be listened, since usually he is current not to find it due to so large reduced his easily and, which is worse, he is very current not to hear the call tone and, therefore, to lose numerous calls that could be important. And not only that, but is important to know that the life of the single people is full of other equipment and television, radio transmitters that entertain and give company at the same time as they bother in the communication processes because the people who listen to the radio, TV and others are not used to listening to the calls.

In Addition, usually it happens that the people to whom essentially the propose base is destined here, have reduced the auditory capacity and/or the visual capacity, and so the difficulty to hear the tone of call of the conventional mobile phones, if they do not have them very near or they do not see them directly is very elevated.

Therefore, also he would be desirable to count on a base for the terminal of the mobile phone that allows to amplify the call tone and that emits easily visible a luminous signal simultaneously, assuring the warning an incoming call.

With respect to state present of technique, fits to indicate that, although some devices destined to the incorporation of a mobile phone exist in the market, on the part of the applicant the existence is not known of which it presents some characteristic techniques, structural and constituent concrete resemblances to which it presents the system of telephone communication, multifunctional and portable that the present invention proposes, since majority of devices well-known or are destined to serve as platform of charge or, if they are destined to the type of user that concerns here, are thought to incorporate a terminal of mobile telephony specifically designed for it.

### DESCRIPTION OF THE INVENTION

The communication system of the present invention comprising a base and a wireless or mobile telephone that can be connected in a wireless way to said base, characterized in that said base comprises:
- a battery to allow its portability;
- a plurality of push buttons to allow to realize the telephone functions through the connection to said base;
- a loudspeaker to listen to a telephone call;
- a microphone (to allow to realize a telephone call.

Advantageously, said base and said telephone comprise corresponding batteries, so that when said telephone is placed on the base, said base loads the battery of said telephone.

This way, thanks to the battery of said base, this base is autonomous, so that it can be moved to any desired place. In addition, provided that the telephone is placed on the base, the battery of the telephone will be loaded, even when this base is fed through its battery.

Advantageously, said base also comprises a lighting that has the function to indicate the load level of the battery of the telephone and to warn on the reception of a call. Thus, the user will be able to see with the naked eye if the battery is sufficiently loaded or not, and also he will be able to know if somebody is calling him even if he does not hear the warning sound. It must be also noted that the lighting can project the light at a distance.

When the telephone is not on the base, the lighting indicates the load of the battery of the base, and when the telephone is placed, the lighting indicates the load of the telephone.

Preferably, said base also comprises a radio that turns off or diminishes its volume when it detects the reception of a call. This way, if the user is listening to the radio he will know if he is receiving a call simply because he will stop listening to the radio.

Advantageously, said lighting protrudes from said base so that it can be seen from any position.

According to a preferred embodiment, said lighting has of a cubical shape, leaving light to pass through its faces.

Advantageously, said base also comprises an informative screen.

According to a preferred embodiment, said base comprises a housing for said telephone, said housing including a connector.

Said base can also include advantageously an emergency push button.

The communication system of the present invention can also comprise a plurality of emergency push buttons connected to the base in a wireless way, as by radio frequency. For example, these push buttons can be placed in different rooms in a house, so that the user can press them in case of emergency and, through the communication system of the present invention, perform a call to a certain person or to emergency services.

Advantageously, the battery of said telephone is loaded by induction.

Thus, as previously noted, the object of the invention is a multifunctional and mobile system for telephone communication, which is essentially is intended and designed to be used by any person and in particular by elderlies and/or persons with certain reduced capacities, with the purpose of facilitating them the use of certain basic functions of any terminal of mobile telephony, and to be able to make calls to several numbers of fast marking and to receive calls, visualizing in a screen, with letters of great size, the number or the name (in case of belonging to the prerecorded listing of the telephone directory) of the incoming call, allowing, in addition, to associate to line of this mobile phone to an emergency telephone service with which to be able to contact, as well as to serve as a hands-free base and to amplify the sound of the tone of the call, associating it in addition to a luminous signal, also serving as a charging station for the battery of said terminal, as a lamp and as an alarm clock radio, all this in a mobile and independent element, able to located in any stay of the house as well as to be used in any place where it can be needed during an undetermined time.

For all this, concretely, the telephone communication system, is configured by means of a casing with a housing suitable to house a mobile phone terminal, in which, inside it, control electronics is incorporated, properly connected with the different functional elements thereof, that communicates with the power signal of the battery of the mobile phone terminal as well as with the electronics thereof, by means of a Bluetooth type wireless connection, a connection by induction, a physical connection of the kind USB port or any other system, whether now known or to be devised, suitable to this aim, including Wi-Fi or Radio Frequency to incorporate additional alarm elements.

For their part, the functional elements of the base consist, essentially, in the following:
- Several push buttons for fast marking, preferably three, that will allow to realize a call to the numbers previously associated to each of them, allowing the user to realize a telephone call to these numbers by simply pressing one of these push buttons.
- An informative screen to visualize the name, number or image associated to the numbers of the incoming and outgoing calls, which is configured so that the text is of great format, for example of the dimension of the width of the forefinger of an adult, or approximately among 50 and 100 points, wherein, in addition, when the base is awaiting or in stand-by, the time, or frequency or the name of the radio station will be able to be visualized, in case such functions are activated in the charging base.
- A push button to respond, which when it is pressed it allows the user to respond to an incoming call and to obtain tone to realize an outgoing call, of the ones provided in the memory of the mobile phone terminal. This push button to respond will also allow, when the telephone is placed on the base, to initiate the process for a hand-free call.

- A push button to hang up, which when it is pressed it allows the user to cut communications at the same time as, in common agreement with the standard of industry, it allows to turn on/off the set by continuously pressing it.
- A menu push button that is associated to the directory of numbers memorized in the mobile phone terminal, and which when it is pressed it shows in the screen the first numbers of this directory. Additionally, this menu push button allows to certify the radio station we want to listen and that appears in the screen, and to fix it on the dial.
- An up push button (or with sign +) and a down push button (or with the sign - ), which when they are respectively pressed they allow to up or down positions in the list of numbers of the directory which is shown in the screen when pressing the menu push button, and which serves additionally to up or down the radio station in the dial, until fixing it with the menu push button previously described.
- A lighting, that besides serving as lighting point to illuminate by itself the near surroundings of the base, increases its power in the base at the level of load of the mobile phone placed on said base, in an intermittent form or not, when an incoming call takes place, warning the user of such circumstance, and which consists preferably of a lamp with adjustable light source and low consumption, being linked to a button to regulate the intensity that can work independently.
- A loudspeaker, that besides amplifying the sound of the mobile phone terminal to allow the use of the base like a hands-free device, and to allow to listen to the radio, amplifies the tone of the incoming calls, warning the user of such circumstance, said loudspeaker being associated to a button to regulated the volume.
- A microphone.
- An emergency push button, which when it is pressed it connects the line of the telephone terminal with a switchboard for phone support service, with which such service has been previously contracted, wherein said push button can be associated to a radio frequency device that links it to another independent push button intended to be carried by the user, for instance in the pocket or hanging to around his neck.

It Is important to note that, for the power supply of the advocated base, it is envisaged to connect it to the grid by means of conventional or magnetic wiring, being optionally envisaged to incorporate within the own equipment a reloadable battery as an alternative power source.

Preferably, although not exclusively, the use of the mobile phone terminal must be optimized and easy to for elderlies, for example with a loading system by induction.

The invention is aimed to simplify the operations of loading the equipment by means of connections which are easy to find, to manipulate, to verify and to accustom to:
- Easy to find: it will be a visible equipment and suitable to be palpated at his casing, and it will be provided with elements for self-searching by pressing calling push button of call at the charging base.
- Easy to manipulate: the pins can be different from standard ones; they can be magnetized pins which allow to load the equipment without major difficulties other that putting into contact two surfaces.
- Easy to verify: it will not generate doubts in the load or the unload, neither in the rest of functions of the equipment, due to the pressure in the connection, the signaling or the illumination of a pilot.
- Easy to accustom to: to mix with furniture that allows to identify in a simple manner what is needed.

The device of the invention complies with these basic functions, in order to be fully adapted to elderlies.

In addition, the base according to the invention presents an ergonomics optimized to be used by people of certain age, for which the more common decreases of capacities are considered in the design features:
- Reduced mobility: push button having minimum dimensions of 10 x 10 mm.
- Lack of vision: solution with not less than 1000 lumen.
- Arthrosis: platform with a minimum of 10 cm in width and 20 cm in length.
- Lack of sensitivity: push buttons protruding a minimum distance of 1 mm.

### BRIEF DESCRIPTION OF THE DRAWINGS

Next the detailed description becomes of a form of preferred, although nonexclusive accomplishment, of the system of multifunctional telephone communication object of the invention, for whose better understanding it accompanies by some drawings in which it acquires knowledge as a nonlimiting example:

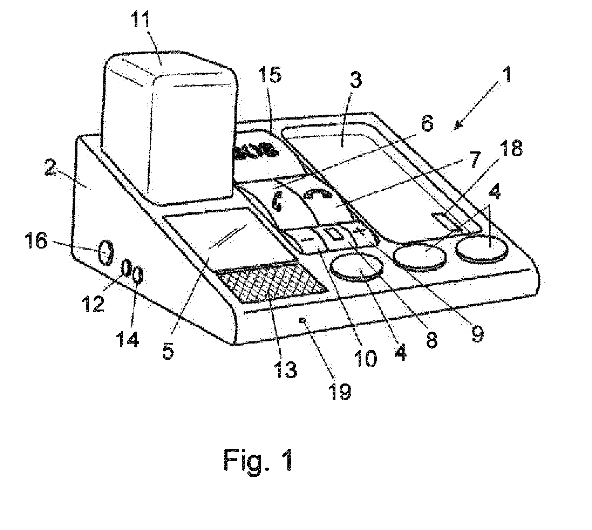

Figure 1, a view in frontal perspective of one first accomplishment of the communication system object of the invention, being appraised in her its configuration and the main parts that understand; and

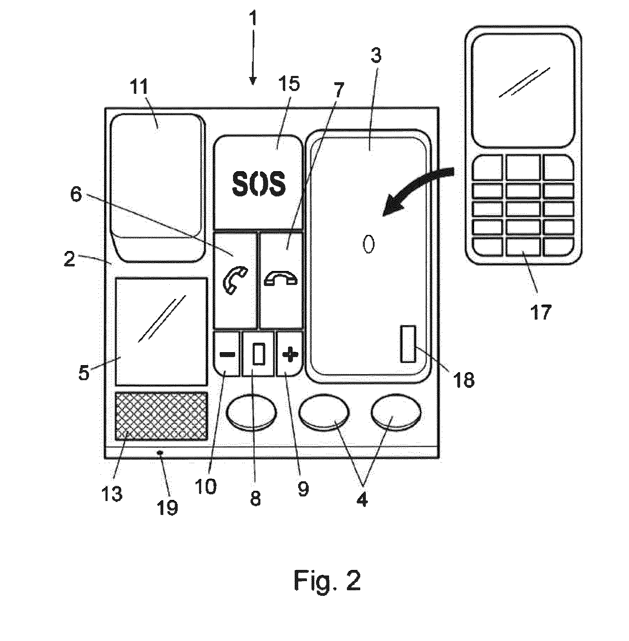

Figure 2 is a view in plant superior of the first accomplishment of the communication system according to the invention, shown in the preceding figure, being represented in this case with a terminal of mobile telephony;
Figures 3 and 4 are seen in perspective of one second alternative accomplishment of the system of communication of the present invention;
Figures 5 and 6 are seen in perspective of one third alternative accomplishment of the system of communication of the present invention; and
Figure 7 is a view in perspective of one fourth alternative accomplishment of the system of communication of the present invention.

### DESCRIPTION OF PREFERRED EMBODIMENTS

In these drawings it can be appraised as base 1 at issue, is formed from a housing 2 with an apt lodging 3 to welcome a terminal of mobile phone 17 anyone, and in which, in addition, are contemplated the following associate functional elements to the electronics and to the line of this terminal of mobile phone 17:
- Bellboys of fast marking 4, preferably three; each one of as is equipped with a different number, so that the system of multifunctional and portable telephone communication of the invention counts on average assigning to the selected numbers, determined numbers of the memory of the terminal of mobile phone 17.
- Informative Screen 5, apt to visualize the associated name, number or image to the numbers of the incoming and salient calls, hour or radio transmitter, being formed so that the text is of great format, for example, of a width similar to the one of the forefinger of an adult person, that is between 50 and 100 points.
- Button to respond 6; button to hang 7.
- Button of menu 8 to show the guide of numbers memorised in the terminal of mobile phone 17.
- Button of ascent (or with 9 sign +) and button of slope 10 (or with the sign -), for displacement by the menu and of "control of agenda".

The base counts, in addition, with a lights 11 that serves to illuminate by itself and increases its power when taking place an incoming call, preferably consisting of an adjustable light source of low consumption, tie to a button volume control 12; as well as with a loudspeaker 13 associated to a button volume control 14, through which the sound of the calls of the terminal of mobile phone 17, the radio is listened to, and the tone of the incoming calls, amplified and with a microphone 19.

Finally it is important to in emergency emphasize the existence of a button 15, that allows to directly connect the line of the terminal of telephony with a switchboard on watch of telephone attendance with which it has contracted such service.

Described the functional elements of base 1 are associated to the electronics and, therefore, the line of the terminal of mobile phone 17, by means of a control electronics (represented in the drawings) that incorporates housing 2, which it is not connected with each of them as well as with the signal of power of the battery of this terminal of mobile phone 17 allowing the feeding of the same to maintain loaded it, and simultaneously with the electronics of the own terminal inner, being realized this connection by means of wireless connection, Bluetooth type or another anyone, by means of connection by induction or physical connection type USB port or similar. In the drawings an example of connector, referenced has acquired knowledge with 18, that as much exemplifies a possible connector of transmission of the signal for data as of the feeding, that is to say as half of connection and feeding of the base, having to be indicated that, optionally this connector can consist of a magnet that collaborates with a metallic part of the terminal of mobile phone 17.

For the power supply of base 1 [conexionado] to the network by means of the corresponding wiring, or a reloadable battery, [habiendose] is contemplated its anticipated a switch of ignition 16 of the global set of equipment.

In agreement with the invention, the terminal of mobile phone 17 must realize in its totality the basic act to realize and to receive calls. It Must be an electronic wireless device that allows to have access to the telephony network.

In agreement with a favorite accomplishment the praised base presents the following concrete characteristics:
Informative screen 5, presents the following attributes:
   - Rectangular Form of approximately 50 xs 50 mm.
   - Clear and legible Typography. - It is not necessary color.
   - High contrast between letter (white) and bottom (black).

The suitable illumination stops:
- To Allow to read the text in the darkness
- Not to bother the reading during the day or in illuminated zones.

Optionally, it has two levels of illumination, one more intense than the other to election of the user.

The bellboys of fast marking 4 present the following characteristics of design:
- Rectangular Form of 7.5 xs 15 mm or to circulate.
- They Are great and easy to detect with the tact, with a minimum altitude of 1 mm.
- They activate with a small but sufficient pressure (to avoid an accidental pulsation).
- It is indicated that the button has been pressed with a "click".
- They Are illuminated underneath letting clearly as much see the symbol in the darkness as in illuminated zones.
- They are numbered.
- The numbers are of 7 mm of height and color resisted with the bottom. The functions that fulfill are:
- Like memories for system of fast call.
- The button to respond 6 (or of call) presents the following characteristics:
- Rectangular Form of 11 xs 15 mm.
- Great and easy to detect with the tact, a minimum altitude of 1 mm.
- Located underneath the screen in the left zone.
- One activates with a small but sufficient pressure (to avoid an accidental pulsation).
- It is indicated that the button has been pressed with a "click".
- It is identified with a symbol that represents an offed-hook telephone.
- The symbol is of green color.
- He Is illuminated underneath letting clearly as much see the symbol in the darkness as in illuminated zones.

The functions that fulfill are:
- To Off-hook to call - To Accede to the agenda
- To Accept any action

The button to hang 7 presents the following characteristics:
- Rectangular Form of 11 xs 15 mm.
- Great and easy to detect with the tact, a minimum altitude of 1 mm.
- Located underneath the screen in the right zone.
- One activates with a small but sufficient pressure (to avoid an accidental pulsation).
- It is indicated that the button has been pressed with a "click".
- It is identified with a symbol that represents a hung telephone.
- The symbol is of red color.
- He Is illuminated underneath letting clearly as much see the symbol in the darkness as in illuminated zones.

The functions that fulfill are:
- To Hang to call
- To Cancel any action

The bellboys for displacement by the menu, of "control of agenda" or "control of radio transmitter" of ascent 9 and slope 10 present the following characteristics:
- Rectangular Form of 11 xs 15 mm.
- Great and easy to detect with the tact, a minimum altitude of 1 mm.
- They are located in center, underneath the screen and above the bellboys to mark.
- They activate with a small but sufficient pressure (to avoid an accidental pulsation).
- It is indicated that the button has been pressed with a "click" easy to detect.
- They Are illuminated underneath letting clearly as much see the symbol in the darkness as in illuminated zones.
- They are distinguished by some you shoot with an arrow of 4mm of height and 10 mm in length. - Symbol of black color.

The functions that fulfill are:
- To Raise and to lower in the menu.

Optionally the additional existence of a button of blockade of screen (not represented in the figures) with the following characteristics is contemplated:
- Great and easy to detect with the tact, a minimum altitude of 1 mm - Located in the lateral one straight.
- One activates sliding by a channel of 30 xs 5 mm, by means of a small but sufficient pressure (to avoid an accidental activation).
- It is indicated that the button has been activated with a "click" easy to detect. It Has three positions:
- One for the blockade
- Two for more or less illumination
- The symbol of a key Must to be able to identify the button

The control knob of volume 14, although in the figures it has imagined as a turn button, in the favorite accomplishment will present the following characteristics:
- Rectangular Form of 10 xs 5 mm.
- Great and easy to detect with the tact, a minimum altitude of 1 mm.
- Located in lateral the left one
- They activate with a small but sufficient pressure (to avoid an accidental pulsation).
- It is indicated that the button has been pressed with a "click" easy to detect. It is differentiated in two parts:
- Part superior to raise volume indicated with a symbol more.
- Part inferior to less lower volume indicated with a symbol.

Loudspeaker 13 preferably presents the following properties:
- Are two loudspeakers located in the lateral ones.
- Each loudspeaker has rectangular form with some dimensions of 35 xs 5.5 mm.
- The loudspeakers must be adjustable.
- They Have a power of 110 [dB].

Microphone 19:
- Inferior of the telephone is located in the part.
- A discreet but visible aspect by an orifice of 01 mm Has.
- Adaptable at the level of voice of the user to cushion possible excesses of tone. On the other hand, the internal elements of base 1 are, essentially, the following:
- Battery: The load system is adapted to the freight station being this by induction. - Electronic electrical Circuit/: It Controls the basic functions of the mobile, described in the section processes. It Contains screen LCD; Dark Bottom and white letters; Clear and great Letters; Electrical System of the loudspeaker; It Assures that the loudspeaker sounds to option of the user with a maximum of 110 [dB]; Electrical System of the microphone; High sensitivy allowing to speak to 1 m of distance; It Must regulate the voice tone to reflect it always normal, Correlation with the loudspeakers to increase the volume of them in relation to the distance of the voice; Plastic Plate of connection; It Protects the electrical plate of shocks and accidents; It Connects the button seller with the electrical plate; Antenna; It Allows the access to the mobile grid.

Finally, the main processes of operation of the praised base are the following, telling logically with that the mobile phone terminal is placed in the base and ignition.
- To Dial number:

When they are pressed the numbers directly are seen in the screen: "calling a: 65." Whenever a number is pressed a voice announced pressed what to.
Once finished dialing the number the call button is due to drive (To Off-hook).
To Off-hook

Easy Access to the button, activated with one weighs pressure.
Button of easy identification, clear symbols.
Once action is due to see in the screen the clear and great phrase of a that is being called: "Calling to Luis".
To Follow the conversation
Once the call is responded is due to see in the screen the clear phrase and great of which it is the action: "Speaking with Luis".
With the loudspeakers in the sides if the user takes headset this receives the signal perfectly.

The central loudspeaker allows that the sound is received from normal form.
If increases of the volume of the voice take place as it is common in adults the microphone regulates the voice tone automatically.
To Hang
Easy Access to the button, activated with one weighs pressure.
Button of easy identification, clear symbols. Once action is due to see in the screen the clear and great phrase of a that is being called: "Conclusion of call".
With a number in agenda:
To Locate number
Pressing the call button (green button) it is acceded to the agenda
With the bellboys to raise and to lower it is sailed by her
Once selected the name of the person to whom is wanted to call one becomes to press the call button.
A voice would announce the person who has selected herself to call.
To Off-hook
Easy Access to the button, activated with one weighs pressure.
Button of easy identification, clear symbols.
Once action is due to see in the screen the clear and great phrase of a that is being called: "Calling to Luis".
To Follow the conversation
Once the call is responded is due to see in the screen the clear phrase and great of which it is the action: "Speaking with Luis".
With the loudspeakers in the sides if the user takes headset this receives the signal perfectly.

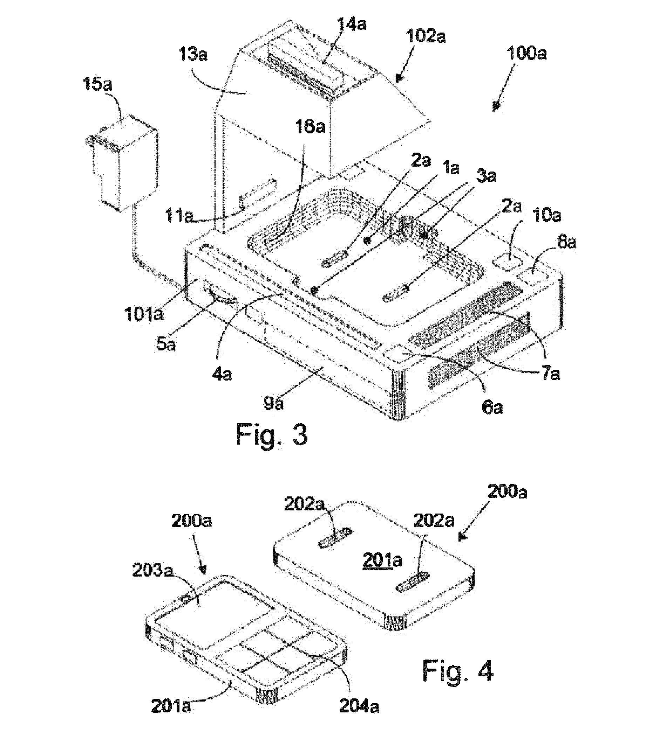

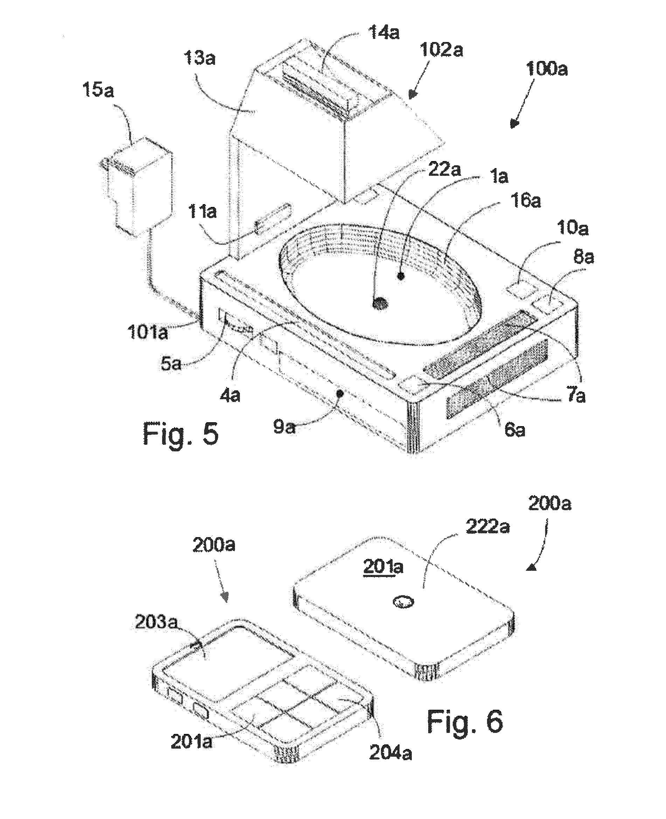

The central loudspeaker allows that the sound is received from normal form.
If increases of the volume of the voice take place as it is common in adults the microphone regulates the voice tone automatically.
To Hang
Easy Access to the button, activated with one weighs pressure.
Button of easy identification, clear symbols.
Once action is due to see in the screen the clear and great phrase of a that is being called: "Conclusion of call".
With number in memory:
To Press memory
In Order to call using the fast access the number is due to beat during 5 seconds where the telephone of the person is stored who is wanted to call.
A voice announces the name to which the memory belongs.
Once accepted the clear and great phrase of a is due to see in the screen that is being called: "Calling to Luis".
To Follow the conversation Once the call is responded is due to see in the screen the clear phrase and great of which it is the action: "Speaking with Luis".
With the loudspeakers in the sides if the user takes headset this receives the signal perfectly.
The central loudspeaker allows that the sound is received from normal form.
If increases of the volume of the voice take place as it is common in adults the microphone regulates the voice tone automatically.
To Hang
Easy Access to the button, activated with one weighs pressure.
Button of easy identification, clear symbols.
Once action is due to see in the screen the clear and great phrase of a that is being called: "Conclusion of call"
Process to receive call:
To Identify that they are calling
Three actions Happen to warn of the call:
The telephone sounds with a strong melody.
An intense vibration (that will become disconnected when being in the freight station).
The light ignites of intermittent form.
To Off-hook
Easy Access to the button, activated with one weighs pressure.
Button of easy identification, clear symbols.
To Follow the conversation
Once the call is responded is due to see in the screen the clear phrase and great of which it is the action: "Speaking with Luis".
To Hang
Easy Access to the button, activated with one weighs pressure.
Button of easy identification, clear symbols.
Once action is due to see in the screen the clear and great phrase of a that is being called: "Conclusion of call"
Text Message
To Listen To message
When receiving a text message will see in the screen the phrase "message of Received Luis"
Pressing the button to off-hook the message will be able to be listened to and to be read. Once finalized it will be possible:
To Return to listen to the message pressing the called button (green).
To Leave the zone messages being pressed the button to hang (red). To Write message
Pressing the button to raise it is acceded to the mail.
It Appears in the screen the Word: "Message: ".
By Means Of voice the message will be dictated while the mobile writes it.
Once finalized the called button will be pressed (green).
It Will Appear in the screen the message: "Number:".
The number is selected to send the message.
If it is wanted to accede to the agenda will be due to press the called button (green) without there is no written number.
It is accepted pressing the called button (green).
Next two alternative accomplishments in reference to figures 3 to 6 are described.
In these drawings 15a can be appraised that the set of the invention is formed by a mobile phone 200a (figures 4 and 6) and one bases 100a (figures 3 and 5), plug-in to the mains through a pin.
The base 100a is essentially flat, anticipated for tablecloth, and has a provided housing 101 a of an ample lodging curved-concave to receive the mobile phone 200a. The lateral lodging has it some you reduce 3a to facilitate the manipulation with the fingers of a user in the introduction or extraction of the mobile phone 200a. The base 100a also has the habitual electrical, connectable connections with an electrical energy source, for example the own mains, or another source, for the power supply of the mobile phone 200a and for the load of the batteries of the same.
In the [Figs]. 3 and 5, in which they are to two alternative variants of the base 100a, the mentioned lodging is seen that curved-concave the one of the base 100a, has widely cleared internal walls, being adapted to receive and to lodge with comfort the corresponding mobile phones 200a, shown in the [Figs]. 4 and 6.
The electrical connections of the base 100a include induction couplings preferably, and are exempt of contacts metal-metal.
In the base 100a of 3 Fig and the mobile phone 200a of Fig 4, these induction couplings includes two male connectors 2a in the base 100a, and two corresponding female connectors 202a, of complementary form, in the housing 201 a of the mobile phone 200a. The male connectors 2a are symmetrically had with respect to average planes of this lodging [curvoconcavo] the base 100a, to both longitudinal ends of the lodging, so that the mobile phone 200a can be introduced in any horizontal position. The configuration of the male connectors 2a curved-convex and is widely cleared.
In correspondence, the mobile phone 200a of Fig 4, adapted to work in conjunction with the base of Fig 3, includes two female connectors 202a of configuration curved-concave, complementary of the form of these male connectors 2a.
In the base 100a of 5 Fig and the mobile phone 200a of Fig 6, these induction couplings includes a male connector 2a in the base 100a, a central position of the lodging, and a corresponding female connector 222a, of complementary form, in the housing 201 a of the mobile phone 200a, had [centradamente] in the later part this one last one.

Preferably, the male connector 22a of the base 100a (Fig 5) and the female connector 222a of the mobile phone 200a (Fig 6) are in the form of spherical cap.
In the [Figs]. 3 and 5 can be seen that the base 100a understands a lodging 9a in its housing 101 a, adapted to receive one second additional battery of the telephone able to load the mobile phone 200a, connected to the connectors 2a, 22a of the lodging and to the electrical energy source for their own load. The electrical [conexionado] one of the system is like the electrical energy flows of the network to the base of the mobile 200a connected in the base 100a, first of all, and to the additional battery secondly, when the battery of the mobile phone 200a or is loaded, or when 200a is not a mobile phone in the base 100a. Case of disconnection of the mains, the energy can flow of the additional battery to the battery of the mobile phone 200a mounted in the base 100a.

In Addition, the base 100a includes mass media of signal, for the input/output of the signal of the mobile phone 200a, arranged in its lodging, towards sonorous and/or visual interfaces of the housing 201 a of the base 100a.
In the [Figs]. 3 and 5 one radio with dial can be appraised that the base 100a includes a loudspeaker 7a, 4a and rolls (or digital system) of tuning 5 to, a button answering machine 6a for free hands, a button to hang 8a, and a button to look for 10a. Although not shown, the base 100a can also count on a connector USB series or similar, for the connection of a conventional shipper to the network or for the load of other similar devices, or for load/unloading of data to a PC or similar computer science device.

Like important complementary characteristic of the set of the invention, the base 100a counts on a lights 102a, connected electrically with the electrical energy source and in parallel with the battery of the mobile phone, so that its state of illumination corresponds with the degree of load of the battery of the mobile phone 200a. Thus, when the battery of the mobile phone 200a completely is unloaded, the lights 102a is totally dull, whereas when the battery totally is loaded, the lights 102a totally is ignited or with a high level of luminance, to indicate that the load process has been completed.

In the example that acquires knowledge in the drawings, the lights 102a has a switch 1, and is equipped with a lamp 14a or light bulb and a screen 13a.
Be Observed that the mobile phone 200a of the present invention includes a keyboard 204a with a little number of keys, predefined functions, purposes of simplification in the use. The keys can be configurable according to the needs of a user with the own difficulties of La Tercera age or of a person with a certain degree of incapacity.

It Must be indicated approximately that the section in plant of the lodging the one of the base of Fig 5 could be elliptical or completely to circulate, with a maximum diameter just as the longest diagonal of the mobile phone 200a. This way, it would be possible to place this one last in absolutely any angular position in the base 100a. You reduce Them lateral 3a would at any moment be constituted by the present breath between the telephone 200a and the wall 16a of the lodging.

In the same way, the possibility that is anticipated the base 100a is equipped with a waterproofing treatment, which is of particular importance, when being destined the mobile phone set and especially bases of the invention to people of La Tercera age or with psychic or functional incapacity.

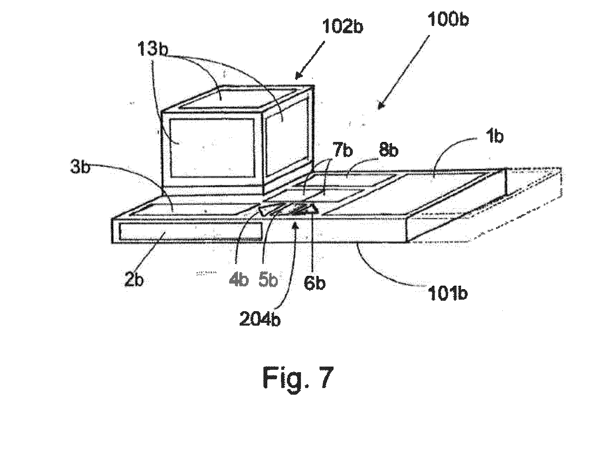

Next another alternative accomplishment in reference to figure 7 is described.
In this figure it is possible to be appreciated that the base 100b is essentially flat, being predicted for a tablecloth functionality and has a provided housing 101 b of an ample lodging curved-concave IV to receive the mobile phone.

The base 100b also has the habitual electrical, connectable connections with an electrical energy source, for example the own network, or another source, for the power supply of the mobile phone and for the load of the batteries of the same. The electrical connections of the base 100b include induction couplings preferably, and are exempt of contacts metal-metal.
The base 100b includes a loudspeaker 2b, one radio with dial or screen 3b and a keyboard 204b with control keys of the radio and get hold of mobile 4b, 5b, 5, pulsers of call and [rellamada] 7b and a button of alarm 8b.

Like important complementary characteristic, the base 100b includes a lights electrically 102b connected with the electrical energy source and in parallel with the battery of the mobile phone, so that its state of illumination corresponds with the degree of load of the battery of the telephone. Thus, when the battery of the telephone completely is unloaded, the lights 102b is totally dull, whereas when the battery totally is loaded, the lights 102b totally is ignited or with a high level of luminance, to indicate that the load process has been completed.

In this accomplishment, the lights 102b has a screen 13b with several faces of translucent material for the exit of the light. The lights can have any type of screen 13b, either of center or in cubical form with the translucent faces for its better visibility, and can have one or the more colors of light emission.
Really, it includes an integrated set of shipper 100b, lights

102b and radio, whose functions interchange to give to sense to a set of services to the user prioritizing the telephone, connected with the radio and the lights. In this case of triple functionality, the shipper 100b, the lights 1 02b and the radio share the electrical connections to the network.

The radio can be analogical or digital, A. M. or FM, any type of radio or any brand. One is made up of a viewfinder of transmitters and three bellboys of "above" 4b, "down" 6b, and "[OK]" 5b, the bellboys 4b and 6b serve to look for the transmitters and the "[OK]" 5b to fix them.

The lights 102b can have visibility shades, since it must have visibility from all the angles of view. This design implies as possible variant a bucket whose sides are translucent and allow to see the light and its intensity from any point of a stay. Additionally it has the part superior of the bucket also in glass or visible material or translucent, so that it projects the light upwards, and this projection is visible from any direct or indirect point.
8b Exists a button of alarm integrated and ample measures, connected to an aid power station, that allows with a single pressure to develop an automatic communication with a power station of alarms, that makes contact with the user in seconds. Also it has a location function, since 100b informs automatically into the location of the base, in case this station has moved to a place noncontemplated in the use contract (vacations, etc.). The transmission of the location is realized of diverse forms: triangulation of signal, GPS, etc.
Also two bellboys exist 7b to hang and to call integrated in the housing 101 b, who have been designed so that they demonstrate that they are "to off-hook/to emit call first" and "to hang/to finalize" the second.

Also he can have a keyboard of numbers that do the times of keyboard of calls. The main objective is the integrated operation of the three elements of automatic form, and for that reason the following ways are described:
- Way shipper and lights: once connected to the network, the load of the battery begins. When the telephone in the lodging is deposited, the battery of the telephone begins load of automatic form. When the telephone is not placed on the base, the lights indicates the load of the battery of the telephone by means of variations of intensity of light or variations in the color of the light or both things simultaneously, or separately. When the telephone is on the base, the lights indicates the load of the battery by means of variations of intensity of the light or variations in the color or both things simultaneously or separately. The lights always can work independently by means of a selection button.
- Way shipper, radio and lights: once the telephone is in the base, if a call is received, the lights can behave of intermittent form, or can change of color or vary the intensity, with blinkings or any other signal related to the light that it emits. Of the same form, when the telephone is in the base loading itself, or simply kept, its agenda is transferred to the screen, that allows the following options:
   a) when receiving a call: aside from the lights, the button to off-hook allows to take the telephone, and simultaneously it is seen in the screen who is calling. It is spoken by the microphone of the base and the loudspeaker is used. Therefore, when there is an incoming call, as much the lights as the radio is put at the disposal of the call until the user receives it or he finalizes it.
   b) in order to emit a call: when the button is pressed for the first time "to receive/to emit call", the agenda of the telephone visualizes in the screen, the radio stops working if it is working then and with the bellboys the user can look for the contact that wishes to call. When it has located it, it returns to press a button to realize the call and equipment calls to that contact. Again the conversation stays by means of the loudspeaker and the microphone.

## Claims

1. Communication system, comprising a base (1) and a wireless or mobile telephone (17) that can be connected in a wireless way to said base (1), **characterized in that** said base (1) comprises:
- a battery to allow its portability;
- a plurality of push buttons (4, 6, 7, 8) to allow to realize the telephone functions (17) through the connection to said base (1);
- a loudspeaker (13) to listen to a telephone call;
- a microphone (19) to allow to realize a telephone call.

2. Communication system according to claim 1, wherein said telephone (17) also comprises a battery, so that when said telephone (17) is placed on the base (1), said base (1) loads the battery of said telephone (17) regardless of the availability of energy from the electrical grid.

3. Communication system according to claim 1, wherein said base (1) also comprises a lighting (11) that has the function to indicate the load level of the battery of the telephone (17) or the base (1) and to warn on the reception of a call, regardless of the availability of energy from the electrical grid.

4. Communication system according to claim 3, wherein said lighting (11) protrudes from said base (1) so that it can be seen from any position 360º around said lighting.

5. Communication system according to claim 1, wherein said base (1) also comprises a radio that turns off or diminishes its volume when it detects the reception of a call.

6. Communication system according to claim 4, wherein said lighting (11) has a cubical, cylindrical, pyramidal or anyway orthogonal shape, leaving light to pass through its faces 360º around said lighting.

7. Communication system according to claim 1, wherein said base (1) also comprises an informative screen (5).

8. Communication system according to claim 1 or 2, wherein said base (1) comprises a housing (3) for said telephone (17), said housing (3) including a connector (18).

9. Communication system according to claim 1, wherein said base (1) also comprises an emergency push button (15).

10. Communication system according to claim 1, comprising a plurality of emergency push buttons that are connected to the base (1) in a wireless way, as by radio frequency.

11. Communication system according to claim 2, wherein the battery of said telephone (17) is loaded by induction.
